(19) Europäisches Patentamt
European Patent Office
Office européen des brevets

(11) Veröffentlichungsnummer : **0 074 096**
**B1**

(12) # EUROPÄISCHE PATENTSCHRIFT

(45) Veröffentlichungstag der Patentschrift : **26.03.86**

(51) Int. Cl.[4] : **C 08 J 3/12** // (C08J3/12, C08L27:18)

(21) Anmeldenummer : **82108130.4**

(22) Anmeldetag : **03.09.82**

(54) **Kontinuierliches Verfahren zur Agglomerierung von PTFE-Pulvern im flüssigen Medium und damit gewonnenes modifiziertes PTFE-Pulver.**

(30) Priorität : **09.09.81 DE 3135598**

(43) Veröffentlichungstag der Anmeldung : **16.03.83 Patentblatt 83/11**

(45) Bekanntmachung des Hinweises auf die Patenterteilung : **26.03.86 Patentblatt 86/13**

(84) Benannte Vertragsstaaten : **BE DE FR GB IT NL SE**

(56) Entgegenhaltungen :
**EP-A- 0 001 420**
**FR-A- 2 133 673**
**US-A- 3 597 405**
**US-A- 4 123 606**
**US-A- 4 241 137**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Kuhls, Jürgen, Dr.**
**Unghausen 16a**
**D-8263 Burghausen/Salzach (DE)**
Erfinder : **Weiss, Eduard**
**Pergerstrasse 18**
**D-8263 Burghausen/Salzach (DE)**
Erfinder : **Burgstaller, Gottfried**
**Ludwigshafener Strasse 3**
**D-8261 Burgkirchen/Alz (DE)**

**EP 0 074 096 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur kontinuierlichen Herstellung eines agglomerierten Formpulvers aus einem aus der Schmelze nicht verarbeitbaren, körnigen Tetrafluorethylenpolymerisat-Primärpulver mit einem mittleren Teilchendurchmesser $d_{50}$ der Primärteilchen von 20 bis 80 μm in einem den gesamten Prozeß durchlaufenden flüssigen Medium, bestehend aus Wasser und einer organischen Flüssigkeit, die ein solches Tetrafluorethylenpolymerisat zu benetzen vermag und in Wasser zu höchstens 15 Gew.-% löslich ist, wobei das Gewicht/Volumen-Verhältnis von Primärpulver zu organischer Flüssigkeit 7 : 1 bis 1,3 : 1 und das Volumen/Volumen-Verhältnis von organischer Flüssigkeit zu Wasser 1 : 1,4 bis 1 : 50 beträgt, unter mechanischer Bewegung bei Temperaturen von 5 bis 90 °C. Die Erfindung betrifft ferner ein agglomeriertes Formpulver, bestehend aus einem aus der Schmelze nicht verarbeitbaren Tetrafluorethylenpolymerisat mit einer spezifischen Oberfläche von 0,5 bis 4 $m^2/g$, gemessen nach der BET-Methode.

Bekanntermaßen können Polytetrafluorethylen-Pulver (im folgenden abgekürzt für das Homopolymere : PTFE) wegen der extrem hohen Schmelzviskosität, die die Bildung einer Schmelze im üblichen Sinn nicht zuläßt, nur nach speziellen Techniken ähnlich denen der Pulvermetallurgie zu Formkörpern weiterverarbeitet werden. Ihnen gleichgestellt sind in dieser Hinsicht solche Tetrafluorethylen-Polymerisate, die geringe Mengen eines meist fluorhaltigen Comonomeren, das in diesem Sinn meist Modifizierungsmitel genannt wird, enthalten, wobei diese Menge so gering zu bemessen ist, daß der Übergang zu einem aus der Schmelze verarbeitbaren Copolymeren, das heißt einem echten Thermoplasten, noch nicht erreicht wird.

Bei der Weiterverarbeitung kommen zwei Arten von PTFE-Pulvern zum einsatz, nämlich sogenannte Feinpulver, hergestellt durch Emulsionspolymerisation und sogenannte körnige (granulate) Pulver, hergestellt durch Suspensionspolymerisation, wobei sich diese beiden Arten in ihrer Kornstruktur, spezifischen Oberfläche, ihren Pulver- und Verarbeitungseigenschaften sowie auch in ihren Anwendungsgebieten prinzipiell unterscheiden. Die vorliegende Erfindung ist mit Pulvern der letztgenannten Art befaßt, die üblicherweise nach Methoden verarbeitet werden, die das Dosieren in eine Form, das Verpressen zu einer Vorform und deren Sinterung einschließen, wobei insbesondere die Dosierung weitgehend automatisch erfolgt. Dabei werden hohe Anforderungen insbesondere an das Schüttgewicht, die Rieselfähigkeit und die möglichst enge Kornverteilung eines solchen Formpulvers gestellt.

Diese Eigenschaften können von Rohpolymerisaten, wie sie unmittelbar aus dem Polymerisationsprozeß anfallen, nur in seltenen Ausnahmefällen bei Anwendung ganz spezieller Polymerisationstechniken erreicht werden. Außerdem weisen diese eine zu hohe Kompaktheit des Korns auf und sind daher für die Preß-Sinter-Verarbeitung wegen ihrer nichtausreichenden Verpreßbarkeit und ihrer geringen Kornoberfläche nicht geeignet. Bei der meist erforderlichen Feinmahlung solcher Rohpolymerisate, die bei den üblicherweise angewandten Polymerisationsverfahren mit Teilchengrößen im Bereich von 300 bis 3 000 μm anfallen, zwecks Reduzierung der mittleren Teilchengröße entstehen große Anteile an fasrigen Teilchen, wobei die Rieselfähigkeit und das Schüttgewicht ganz erheblich leiden.

Seit langem ist es daher bekannt, die Verarbeitbarkeit solcher granularer PTFE-Formpulver durch sogenannte Agglomerierverfahren (gelegentlich auch als Granulierprozesse bezeichnet) in bewegten flüssigen Medien unter Einwirkung mechanischer Kräfte zu verbessern. Als solche flüssige Agglomeriermedien wurden beschrieben Wasser (US-PS 3 366 615, US-PS 3 766 133), organische Flüssigkeiten, die PTFE zu benetzen vermögen (US-PS 3 265 679), amino- und/oder hydroxylsubstituierte Alkane (US-PS 3 532 782) oder Gemische aus Wasser und in Wasser weitgehend unlöslichen organischen Flüssigkeiten (US-PS 3 527 857, US-PS 3 781 258). Auch eine Teilchenagglomeration im trockenen Zustand wurde beschrieben (US-PS 3 766 133).

Alle diese Verfahren sind als diskontinuierliche Verfahren angelegt, das heißt die chargenweise Befüllung, die Agglomerierung und die Ausschleusung des Produkts aus dem einzigen Behandlungsgefäß geht nacheinander vonstatten. Eine einfache Übertragung eines solchen Agglomerierverfahrens in einen vollkontinuierlichen Betrieb stößt auf erhebliche Schwierigkeiten, da die Qualität des erhaltenen agglomerierten PTFE-Formpulvers rapide abnimmt. Dies ist vermutlich darauf zurückzuführen, daß sich dabei die für die Agglomeration erforderliche mechanische Bewegung in unerwünschter Weise mit der Durchflußbewegung des im flüssigen Medium suspendierten Pulvers bei einem Kontinuum überlagert, wodurch es zum Austrag von Produktanteilen kommt, die den Agglomerationsprozeß noch nicht bis zur vollen « Reife » durchlaufen haben und daher die erwünschten Eigenschaften noch nicht besitzen, was das Eigenschaftsbild des gesamten Produkts dann verschlechtert.

Andererseits wäre ein vollkontinuierliches Verfahren aus wirtschaftlichen Gründen sehr erwünscht, falls es gelingt, die Eigenschaften der damit erzeugten agglomerierten PTFE-Pulver auf diejenigen aus diskontinuierlichen Verfahren einzustellen oder sie gar noch zu verbessern, sowie, falls es ferner gelingt, das agglomerierte PTFE-Pulver in einer gleichmäßigen Produktqualität zu erzeugen. Einige bisher bekantgewordene Verfahren, bei denen auf die Möglichkeit zum kontinuierlichen Betrieb hingewiesen worden ist bzw. die vollkontinuierlich arbeiten, sind in dieser Hinsicht noch sehr unbefriedigend. So wird in der US-PS 3 597 405 eine Methode zur kontinuierlichen Agglomerierung in einem Gefäß beschrieben, bei der unter Verwendung von mit hoher Geschwindigkeit rotierenden Scheiben eine Trommelbehandlung eines mit Wasser und organischer Flüssigkeit lediglich angefeuchteten Pulvers erfolgt. Nachteile

dieser Verfahrensweise sind as geforderte niedrige Füllverhältnis des Gefäßes, um die Bildung von Überkorn durch übermäßige gegenseitige Teilchenberührung zu vermeiden, ferner die bei der eingangs erfolgenden Mahlung und Siebung im feuchten Zustand auftretenden Verstopfungen. Die Bildung eines größeren Anteils von übergroßen Teilchen kann dennoch nicht verhindert werden, das erhaltene Schüttgewicht ist relativ niedrig (< 600 g/l). In der DE-OS 2 218 240 sowie in der US-PS 4 123 606 wird eine im Prinzip ähnliche zweistufige Verfahrensweise beschrieben, bei welcher in der ersten Stufe eine höhere spezifische Rührenergie als in der nachfolgenden zweiten Agglomerierstufe verwendet wird, wodurch eine härtere Schale an der Außenfläche des Agglomerats erzeugt werden soll. Die Durchführung des in der DE-OS 2 218 240 angegebenen Verfahrens führt zwar zu einer Reduktion des Feinanteils, jedoch wird der Grobanteil in der zweiten Stufe durch gegenseitige Teilchenberührung bei niedrigen Rührenergien in unerwünschter Weise erhöht. Dieser Nachteil wird überwunden durch die in der US-PS 4 123 606 beschriebene Verbesserung durch Siebfraktionierung und Rückführung des Grobanteils nach Durchlaufen eines zusätzlichen Zerteilungsschrittes. Als nachteilig bei dieser Verfahrensweise erweist sich jedoch, daß die Naßsiebung des wasserfeuchten und mit Benzin benetzten Agglomerats zu einer Verstopfung durch das benzinhaltige und damit sehr weiche Agglomeratkorn führt. Ferner muß ein nicht unbeträchtlicher Teil des Produktes über diese Zerkleinerungsanlage geführt und damit im Kreis befördert werden. Somit konnte die Aufgabe der Schaffung eines vollkontinuierlichen Agglomerierverfahrens für Pulver aus den aus der Schmelze nicht verarbeitbaren TFE-Polymerisaten, wie sie sich die vorliegende Erfindung gestellt hat, gemäß dem Stand der Technik noch nicht in befriedigender Weise gelöst werden.

Gemäß der Erfindung wird diese Aufgabe gelöst durch ein Verfahren der eingangs genannten Art, das dadurch gekennzeichnet ist, daß das Primärpulver zusammen mit dem flüssigen Medium eine dreistufige Kaskade durchläuft, wobei zunächst das Primärpulver, das Wasser und die organische Flüssigkeit im genannten Verhältnis

a) kontinuierlich in eine mit dem flüssigen Medium gefüllte Vorbehandlungsstufe eingetragen und in dieser fortbewegt werden, wobei das Primärpulver zuerst in einer Förderzone durch ein die Förderung bewirkendes Rührorgan in das flüssige Medium eingezogen und in diesem suspendiert wird, sodann in eine unmittelbar anschließende Dispergierzone gelangt und dort durch Einwirkung eines im Bereich der angewandten spezifischen Rührenergie dispergierend wirkenden Rührorgans in eine im wesentlichen gleichmäßig im flüssigen Medium feinverteilte Form gebracht wird, sodann in eine unmittelbar anschließende Homogenisierzone gelangt und dort unter Einwirkung eines turbinenförmigen Rührorgans zu Sekundärteilchen mit einem mittleren Teilchendurchmesser $d_{50}$ von etwa 100 bis etwa 400 µm voragglomeriert wird, wobei die Vorbehandlungsstufe mit einer mittleren Verweilzeit von 3 bis 30 Minuten durchlaufen wird und die dort eingebrachte spezifische Rührenergie 5 bis 100 W/l beträgt, sodann diese vorbehandelte Suspension

b) eine Agglomerierungsstufe durchläuft, bestehend aus einem vertikal angeordneten Gefäß, in dem 1 bis 8 Rührorgane angeordnet sind, die im angewandten Bereich der spezifischen Rührenergie im wesentlichen keine zerkleinernde Wirkung ausüben, wobei das voragglomerierte Primärpulver unter Erzeugung einer ausreichenden Teilchenberührung im flüssigen Medium zu einem Pulver mit Tertiärteilchen eines mittleren Teilchendurchmessers $d_{50}$ von 150 bis 1 000 µm weiteragglomeriert wird, und wobei die Agglomerierungsstufe mit einer mittleren Verweilzeit von 5 bis 50 Minuten durchlaufen wird und die dort eingebrachte spezifische Rührenergie 2 bis 30 W/l beträgt, danach diese Suspension

c) durch eine Nachbehandlungsstufe geführt wird, gebildet aus mindestens einem horizontal angeordneten Gefäß, wobei das Verhältnis Gefäß-Gesamtlänge an Durchmesser mindastens 2 : 1 beträgt und in diesem Gefäß oder diesem Gefäßen eine Vielzahl von Rühekränzen mit jeweils mindestens 3 und höchstens 8 Blättern vom Typ des Scheibenrührers angeordnet sind, wo unter Einhaltung einer mitleren Verweilzeit von 6 bis 60 Minuten und unter Einwirkung des vielblättrigen Rührorgans, das eine spezifische Rührenergie von 5 bis 30 W/l in die Suspension einbringt, die endgültige Ausbildung der Teilchenform ohne wesentliche weitere Veränderung der mittleren Teilchengröße erfolgt, und schließlich

d) aus der Nachbehandlungsstufe kontinuierlich abgezogen und das agglomerierte Pulver in bekannter Weise vom flüssigen Medium getrennt wird.

Ausgangsprodukte für das erfindungsgemäße Verfahren sind die in bekannter Weise hergestellten körnigen Suspensionspolymerisate des Tetrafluorethylens, die in Gegenwart von freie Radikale bildenden Katalysatoren gewonen werden, nach üblichen Verfahren, wie sie aus der US-PS 2 393 967 erstmals bekanntgeworden sind und seither vielfach abgewandelt wurden. Die Suspensionspolymerisation kann auch in Gegenwart von modifizierenden Comonomeren vorgenommen werden. Solche modifizierende Comonomere sind dem Fachmann wohlbekannt. Beispielsweise fallen darunter Perfluoralkene mit 3 bis 6 C-Atomen wie insbesondere Hexafluorpropylen, ferner Perfluor (alkyl-vinyl)-ether mit Perfluoralkylgruppen von 1 bis 4 C-Atomen wie insbesondere Perfluor (n-propylvinyl)-ether, ferner auch ethylenisch ungesättigte Monomere, die außer Fluor noch mit anderen Gruppen wie insbesondere Chlor oder Wasserstoff substituiert sind, wie beispeilsweise Chlortrifluorethylen. Die Herstellung solcher Suspensionspolymerisate ist beschrieben beispielsweise in den US-Patentschriften 3 331 822, 4 078 134 und 4 078 135, in der GB-PS 1 116 210 und in der DE-OS 2 325 562.

Demgemäß umfaßt der Ausdruck « aus der Schmelze nicht verarbeitbare TFE-Polymerisate » sowohl das Homopolymerisat des Tetrafluorethylens wie auch Copolymerisate, in denen das modifizierende Comonomere in solch kleinen Anteilen vorhanden ist, daß das Charakteristikum « aus der Schmelze nicht verarbeitbar » erhalten bleibt. Derartige modifizierte TFE-Polymerisate weisen eine scheinbare Schmelzviskosität von $\geqq$ 0,1 GPa s, häufig von $\geqq$ 1 GPa s auf, wobei dieser Wert bei modifizierten Polymerisaten bis auf Werte um 100 oder darüber, beim Homopolymerisat bis auf Werte von 900 GPa s steigen kann. Der Ausdruck « aus der Schmelze nicht verarbeitbar » bezieht sich dabei auf die üblichen Verarbeitungsmethoden für echte Thermoplaste. Die scheinbare Schmelzviskosität (Scherviskosität) wird gemessen nach der Methode (Kriechtest) von Ajroldi et al, beschrieben in J. appl. polym. Sci., 14 (1970) Seite 79 ff. Diese Methode ist genauer beschrieben in der US-PS 4 036 802, Spalte 9, Zeile 46 bis Spalte 10, Zeile 41. Bei den Messungen innerhalb dieser Anmeldung wurde sie wie folgt abgeändert : Dehnungsmessung bei 350 °C, Prüfkörper mit 0,25 cm Breite, 0,65 cm Dicke und 3,5 cm gemessener Länge bei der Dehnung.

Vor der erfindungsgemäßen Agglomeration werden die Pulver in bekannter Weise einer Feinmahlung zur Herabsetzung ihrer mitleren Teilchengröße auf den gewünschten Bereich von < 100 μm unterzogen, was üblicherweise in einer Hammermühle, Luftstrahlmühle oder dergleichen erfolgt. Die so erhaltenen Pulver aus den genannten, aus der Schmelze nicht verarbeitbaren TFE-Polymerisaten werden im folgenden als Primärpulver bezeichnet. Sie liegen in ungesinterter Form vor. Als Suspensionspolymerisate besitzen sie eine spezifische Oberfläche von 0,5 bis 4 m²/g, vorzugsweise von 1 bis 2,8 m²/g. Diese Eigenschaft bleibt auch im agglomerierten Erzeugnis des erfindungsgemäßen Verfahrens erhalten. Die genannte spezifische Oberfläche wird gemessen nach der Methode von Brunauer, Emmet und Teller, beschrieben in J. Amer. Chem. Soc. 60 (1938) Seite 309 (BET-Methode). Diese Primärpulver haben, auch wenn sie, hervorgerufen durch die Mahlung, einen gewissen Anteil fasriger Teilchen besitzen, als Suspensionspolymerisate im Prinzip eine körnige Morphologie und unterscheiden sich darin grundsätzlich von Emulsionspolymerisaten, die in Gegenwart so hoher Mengen von Emulgator hergestellt wurden, daß sie nach beendeter Polymerisation in kolloidaler Verteilung im wäßrigen Medium verbleiben. Die aus solchen kolloidalen Dispersionen durch Fällung gewonnenen sogenannten Feinpulver sind aus Agglomeraten kolloidaler Primärteilchen mit einem mittleren Teilchendurchmesser von etwa 0,1 bis 0,5 μm aufgebaut. Sie besitzen eine spezifische Oberfläche, die üblicherweise oberhalb von 9 m²/g liegt, und sind, wie dem Fachmann bekannt, im allgemeinen nicht nach den obengenannten Techniken zu verformen, auch dann nicht, wenn sie Modifizierungsmittel enthalten.

Die im Rahmen des erfindungsgemäßen kontinuierlichen Prozesses im flüssigen Medium enthaltene organische Flüssigkeit soll das aus der Schmelze nicht verarbeitbare TFE-Polymerisat-Primärpulver benetzen können und sich mit dem gleichzeitig anwesenden Wasser möglichst nicht vermischen, das heißt, diese organische Flüssigkeit soll bei der gewählten Arbeitstemperatur des Verfahrens im untern bezeichneten Bereich eine Oberflächenspannung von höchstens etwa 40 mN/m besitzen und in Wasser zu höchstens 15 Gew.-%, vorzugsweise zu höchstens 2 Gew.-%, löslich sein. Solche für derartige Agglomerationsprozesse geeignete organische Flüssigkeiten sind dem Fachmann wohlbekannt, so daß eine beispielhafte Aufzählung genügt. Beispielsweise seien genannt :

Alkane und Cycloalkane wie Pentan, Hexan oder Cyclohexan, aromatische Kohlenwasserstoffe wie Benzol, Toluol oder Xylol, Gemische von Kohlenwasserstoffen wie Benzin- oder Kerosinfraktionen und deren Gemische im geeigneten Siedebereich, halogenierte Kohlenwasserstoffe wie Perchlorethylen, Trichlorethylen, Chloroform oder Chlorbenzol oder auch Fluorchlorkohlenwasserstoffe oder Fluorchlorkohlenstoffe wie beispielsweise Trifluortrichlorethan.

Das im folgenden beschriebene erfindungsgemäße, kontinuierliche Verfahren wird bei Temperaturen von 5 bis 90 °C, vorzugsweise von 15 bis 70 °C, und insbesondere bevorzugt bei 30 bis 60 °C, durchgeführt. Die genannte organische Flüssigkeit sol in Abstimmung auf die gewählte Arbeitstemperatur einen Siedepunkt besitzen, der mindestens 10 °C, vorzugsweise mindestens 20 °C, höher liegt als diese gewählte Arbeitstemperatur. Zweckmäßigerweise soll der Siedepunkt 150 °C nicht übersteigen — obwohl dies prinzipiell möglich ist — da dann die Entfernung des organischen Lösungsmittels aus dem gebildeten agglomerierten Pulver erschwert wird.

Zweiter Bestandteil des flüssigen Agglomeriermediums ist Wasser, das zweckmäßigerweise in entsalzter Form verwendet wird.

Das Mischungsverhältnis von Volumenteilen organischer Flüssigkeit zu Volumenteilen Wasser beträgt 1 : 1,4 bis 1 : 50, vorzugsweise 1 : 4 bis 1 : 25.

Im erfindungsgemäßen kontinuierlichen Verfahren durchläuft das zu agglomerierende Primärpulver, das einen mittleren Teilchendurchmesser $d_{50}$ von 20 bis 80 μm, vorzugsweise von 20 bis 50 μm, aufweist, in Bewegungsrichtung eine dreistufige Kaskade. Dabei sollen die hier gebrauchten Ausdrücke Kaskade und Stufe Räume unterschiedlicher Behandlungseinwirkungen bezeichnen, welche zwar zweckmäßigerweise, aber nicht unbedingt notwendigerweise, in getrenten Gefäßen untergebracht sind. Unter dem Begriff Zone innerhalb der Vorbehandlungsstufe sollen hier dagegen Einwirkungsräume verstanden werden, die zwar nicht unbedingt notwendigerweise, aber doch zweckmäßigerweise im gleichen Gefäß angeordnet sind, wobei sich diese Zonen dann in ihren Wirkungsräumen zumindest miteinander berühren, vorzugsweise aber geringfügig überlappen.

Das die Vorbehandlungsstufe umfassende Gefäß wird zunächst mit dem flüssigen Medium, vorzugsweise auch mit dem darin suspendierten Primärpulver gefüllt, beispielsweise dadurch, daß man

das unten beschriebene Verfahren, wie es in der Vorbehandlungsstufe abläuft, zunächst diskontinuierlich durchführt, bis der stationäre Zustand des Kontinuums erreicht ist. In gleicher Weise kann auch bei den folgenden Stufen vorgegangen werden. In dieser Vorbehandlungsstufe, die in einem vorzugsweise vertikal angeordneten und durchlaufenen Gefäß länglicher Form untergebracht ist, werden das Primärpulver, das Wasser, die organische Flüssigkeit im gewählten Verhältnis sorgfältig und gleichmäßig eindosiert. Die gleichmäßige Dosierung des Primärpulvers auf die Oberfläche des bewegten flüssigen Mediums ist von großer Bedeutung für das erfindungsgemäße Verfahren. Zweckmäßig wird dazu ein Dosierbunker eingesetzt, der mit einer vergleichmäßigend wirkenden Austragsvorrichtung versehen ist. Ein solcher Dosierbunker ist beispielsweise beschrieben in der DE-PS 1 531 934. Vom Austrag dieses Dosierbunkers gelangt das einzudosierende Primärpulver entweder direkt oder über ein Vorratsgefäß auf eine Eintragsvorrichtung, beispielsweise eine Rüttelrinne, von wo sie dann in die Vorbehandlungsstufe transportiert wird.

Die beiden Komponenten des flüssigen Mediums, die organische Flüssigkeit und das Wasser, können getrennt zugegeben werden. Vorzugsweise werden diese beiden Komponenten jedoch in vorgemischter Form eingeleitet, was beispeilsweise in einem statischen Mischer in der Zuleitung oder in einem Vorratsgefäß mit Rührer bewirkt werden kann, und zwar erfolgt die Einleitung bevorzugt in die Förderzone oder in deren Überlappungsbereich mit der Dispergierzone. Das bei der Dosierung in die Vorbehandlungsstufe eingestellte Verhältnis zwischen organischer Flüssigkeit und Wasser wie auch zwischen organischer Flüssigkeit und Primärpulver wird über den gesamten erfindungsgemäßen Prozeß hinweg beibehalten, eine Nachdosierung einer Komponente ist im allgemeinen nicht erforderlich, es sei denn, daß Verluste an organischer Flüssigkeit auszugleichen sind, die infolge des Arbeitens bei Temperaturen nahe dem Siedepunkt dieser organischen Flüssigkeit eintreten können.

Das bei dieser Dosierung eingestellte Verhältnis zwischen Primärpulver und organischer Flüssigkeit (Gewichtsteile zu korrespondierenden Volumenteilen, z. B. Kilogramm/Liter oder ein Vielfaches davon) beträgt 7 : 1 bis 1,3 : 1, vorzugsweise 4 : 1 bis 1,6 : 1.

In der Förderzone kommt das auf die Flüssigkeitsoberfläche der Vorbehandlungsstufe aufgebrachte Pulver unter die Einwirkung eines die Förderung in Durchflußrichtung des Kontinuums bewirkenden Rührorgans, wodurch es in das flüssige Medium eingezogen und in diesem suspendiert wird. Als solche die Förderung bewirkende Rührorgane sind vorrangig geeignet Propellerrührer aller bekannten Ausführungsformen, in zweiter Linie jedoch Schrägblattrührer, die schräg gestellte Blätter oder Flügel in rechteckiger Form, gegebenenfalls auch gewölbt, in propellerartiger Anordnung enthalten. Unter Einfluß solcher fördernder Rührorgane gelangt das supendierte Primärpulver in die unmittelbar anschließende Dispergierzone und kommt dort in den Wirkungsbereich eines Rührorgans, das im Bereich der angewandten spezifischen Rührenergie in der Vorbehandlungsstufe eine dispergierende Wirkung ausübt. Ein solches dispergierend wirkendes Rührorgan ist vorzugsweise scheibenförmig ausgebildet und besitzt z. B. im peripheren Bereich der Scheibe beidseitig tangential angebrachte kantige Organe wie Zähne oder rechteckige Blätter. Neben solchen Rührelementen vom Typ der sogenannten Dispergierscheibe können beispielsweise auch sogenannte Scheibenrührer verwendet werden, bei denen solche kantigen Organe radial, beidseitig zur Ebene der Scheibe aufgesetzt sind.

In dieser Dispergierzone wird das Pulver in eine im wesentlichen gleichmäßig im flüssigen Medium feinverteilte Form gebracht, wobei es in dieser feinverteilten Form zum überwiegenden Teil noch in Primärkorngröße vorliegt. Ferner wird ein inniger Kontakt mit der im Wasser feinverteilten organischen Flüssigkeit hergestellt, wodurch diese organische Flüssigkeit in wesentlichen Teilen vom Pulver aufgenommen wird. In der unmittelbar daran anschließenden Homogenisierungszone wird dieser Homogenisierungsprozeß vollendet, und es setzt gleichzeitig eine Voragglomerierung ein, wobei mittlere Teilchengrößen $d_{50}$ von etwa 100 bis etwa 400 $\mu$m — je nach mittlerer Teilchengröße des Primärpulvers und je nach Temperatur und Zusammensetzung des flüssigen Mediums — bei diesen gebildeten Sekundärteilchen erreicht werden. Bewirkt wird dies durch Rührorgane, die vorzugsweise als turbinenförmige Rührorgane im weiteren Sinn dieses Wortes ausgebildet sind. Darunter fallen bevorzugt Rührorgane in der Ausführung einer offenen oder geschlossenen Turbine, das heißt mit einseitiger oder zweiseitiger Abdeckung, geeignet ist aber beispielsweise auch der sogenannte Doppelkreiselrührer. Da sich Homogenisierzone und Dispergierzone in ihrer Einwirkung auf das Primärpulver, insbesondere auch im Hinblick auf die Verhinderung der Bildung oder auf die Verkleinerung bereits gebildeter übergroßer Teilchen, in gewissem Ausmaß überlagern und auch ergänzen, können die in der Homogenisierungszone angewandten Rührwerkzeuge auch in der Dispergierzone verwendet werden, wenn ihre dispergierende Wirkung ausreichend ist.

Zur Sicherung der Wirkung dieser Rührung ist die gesamte Vorbehandlungsstufe mit einer ausreichenden Zahl von Stromstörern versehen, falls die Rührorgane der einzelnen Zonen, die bevorzugt auf einer gemeinsamen Welle angeordnet sind, nicht exzentrisch im Gefäß der Vorbehandlungsstufe angeordnet sind. In der gesamten Vorbehandlungsstufe ist eine durchschnittliche Verweilzeit der Suspension von 3 bis 30, vorzugsweise von 5 bis 15 min, vorzusehen, die eingebrachte spezifische Rührenergie beträgt insgesamt 5 bis 100, vorzugsweise 10 bis 60 W/l Suspension.

Das die Vorbehandlungsstufe verlassende Produkt besitzt ein bereits deutlich erhöhtes, aber noch nicht ausreichendes Schüttgewicht und ein bei weitem noch nicht ausreichende Rieselfähigkeit und Kornstabilität. Es wird nunmehr in die Agglomerierungsstufe eingebracht, wobei die eigentliche Bildung

des Agglomerats erfolgt. In einem vertikal angeordneten länglich geformten Gefäß werden hier durch schonende Einwirkung von Rührorganen, die im angewandten Bereich der spezifischen Rührenergie im wesentlichen keine zerkleinernde Wirkung ausüben, unter Erzeugung einer ausreichenden Teilchenberührung im flüssigen Medium die voragglomerierten Teilchen zu einem im flüssigen Medium in Suspension befindlichen Pulver mit Tertiärteilchen eines mittleren Teilchendurchmessers $d_{50}$ von 150 bis 1 000 μm weiteragglomeriert, wobei bereits der gewünschte Agglomerierungsgrad erreicht wird. Wenn auch die Einwirkung eines einzigen solchen Rührorgans in manchen Fällen ausreichend sein kann, ist es wegen der gleichmäßigeren Einwirkung bevorzugt, mindestens zwei solche Rührorgane einzusetzen. Aus wirtschaftlichen und konstruktiven Gründen wird die Zahl dieser Rührorgane in Abhängigkeit von der Länge des Gefäßes auf 8, vorzugsweise auf 6, begrenzt. Ihr jeweiliger Wirkungsbereich soll sich zumindest berühren, vorzugsweise überlappen. Falls sie — bevorzugt — konzentrisch angeordnet sind, müssen auch hier eine ausreichende Zahl von Stromstörern vorgesehen werden. Die durch diese Rührwerkzeuge eingebrachte spezifische Rührenergie soll 2 bis 30, vorzugsweise 5 bis 20 W/l, die durchschnittliche Verweilzeit in Stufe b) 5 bis 50, voruzgsweise 8 bis 20 min, betragen. Rührorgane ohne zerkleinernde Wirkung in diesem Bereich sind vorzugsweise alle Arten von Propellerrührern, aber auch Schrägblatt-, Schrägbalken- oder Kreuzbalkenrührer, wobei auch Kombinationen solcher Rührer eingesetzt werden können. Das die Agglomerierungsstufe verlassende Produkt besitzt nicht nur bereits den gewünschten und ausreichenden Agglomerierungsgrad, sondern auch die gewünschte enge Kornverteilung, jedoch sind Schüttgewicht, Rieselverhalten und Kornstabilität noch nicht ganz ausreichend. Zu deren Verbesserung und zur endgültigen Festlegung des Eigenschaftsbildes wird das suspendierte und agglomerierte Pulver aus der Agglomerierungsstufe b) einer Nachbehandlungsstufe c) zugeführt. Obwohl die in den einzelnen Stufen ablaufenden Vorgänge nicht bis zum letzten erklärbar sind, so wird doch angenommen, daß in der Nachbehandlungsstufe eine Rundung und Verdichtung der gebildeten agglomerierten Teilchen stattfindet, ohne daß noch eine merkliche Änderung des mittleren Teilchendurchmessers $d_{50}$ der Agglomerate erfolgt.

Diese Nachbehandlungsstufe läuft ab in einem langgezogenen Gefäß, dessen Verhältnis von Länge zu Durchmesser zweckmäßigerweise mindestens 2 : 1 beträgt, wobei sehr hohe derartige Verhältnisse erreicht werden können, wie beispielsweise 25 : 1, vorzugsweise 10 : 1, in einem einzigen Gefäß, oder sogar bis 50 : 1 (Gesamtlänge zu Durchmesser), falls die Nachbehandlungsstufe in mehrere hintereinandergeschaltete Gefäße der genannten Art aufgeteilt wird. Dieses Gefäß bzw. diese Gefäße sind horizontal angeordnet. In diesem Gefäß befindet sich ein vielblättriges Rührorgan, gebildet aus einer Vielzahl hintereinander — vorzugsweise auf einer Welle — angeordneter Rührerkränze, wobei jeder dieser Rührerkränze aus mindestens 3 und höchstens 8, vorzugsweise höchstens 6 Blättern besteht und diese Rührblätter eine Anordnung vom Typ des Scheibenrührers besitzen, das heißt, eine rechteckige form haben und ihre Rechtecksebenen radial auf der Welle angeordnet sind. Eine geringfügige Schrägstellung gegenüber der Welle ist möglich. Die Anzahl dieser nacheinander angeordneten Rührblattkränze vom Typ des Scheibenrührers hängt ab von der Gefäßlänge, wobei der Zwischenraum zwischen zwei solchen Kränzen die Breite der Rührblätter nicht übersteigen soll. Falls mehrere Gefäße hintereinandergeschaltet sind, kommt auch eine Anordnung auf getrennten Wellen, die für je eines dieser Gefäße wirksam sind, in Frage.

In die gesamte Nachbehandlungsstufe wird eine spezifische Rührenergie von 5 bis 30, vorzugsweise von 10 bis 20 W/l, eingebracht, die Verweilzeit beträgt 6 bis 60, vorzugsweise 10 bis 20 min.

Nach Durchlaufen der Nachbehandlungsstufe c) wird das in Suspension im flüssigen Medium befindliche Agglomerat kontinuierlich abgezogen und einer kontinuierlich arbeitenden Filtriereinrichtung zwecks Trennung des agglomerierten Pulvers von der Hauptmenge des Wassers und von einem Teil des organischen Flüssigkeit zugeführt, wobei eine solche Filtriereinrichtung möglichst eine Rückgewinnung der eingesetzten organischen Flüssigkeit erlauben soll. Die Entfernung der Restanteile von Wasser und der verbleibenen organischen Flüssigkeit erfolgt durch Trocknung, vorzugsweise in mehreren aufeinanderfolgenden Trokkenschritten und gegebenenfalls unter Anwendung von Vakuum, wobei die Trocknung bei Temperaturen unterhalb des Kristallitschmelzpunktes zu erfolgen hat und zweckmäßigerweise mindestens 50 °C oberhalb des Siedepunktes der eingesetzten organischen Flüssigkeit vorgenommen wird. Bevorzugt — bei stufenweiser Trocknung vorzugsweise in der letzten Stufe — wird die Trocknung bei einer Temperatur von 250 bis 300 °C bewirkt.

Nach der Trocknung erfolgt eine Abtrennung des Grobanteils, das heißt von übergroßen Teilchen mit einem Durchmesser > 1 500 μm mittels geeigneter Siebung. Dieser Grobanteil beträgt beim Produkt des erfindungsgemäßen Verfahrens höchstens 4 Gew.-%, liegt aber sehr häufig unter 1 Gew.-%, ein Prozentsatz, der bei diskontinuierlichem Verfahren kaum erreicht werden kann. Die Temperatur für das gesamte erfindungsgemäße kontinuierliche Agglomerierungsverfahren, die im obengenannten Bereich gewählt werden kann, wird vorzugsweise von Stufe a) bis Stufe c) innerhalb einer regelbaren Schwankungsbreite etwa konstant gehalten. Unterschiedliche Temperaturen sind möglich, wobei dann ein Temperaturanstieg in Richtung des Durchflusses bevorzugt wird.

In das Primärpulver können vor dem Einsdosieren in die Vorbehandlungsstufe a) übliche Füllstoffe in einer Menge von 1 bis 60 Gew.-% beigemischt werden. Solche Füllstoffe sind zum Beispiel Glasfasern, die gegebenenfalls mit üblichen Hydrophobiermitteln behandelt worden sind, Kohlepulver, Graphit, Molybdensulfid, Bronze, Asbest und dergleichen. Diese Füllstoffe werden dem Primärpulver in einem

Vormischgefäß im trockenen Zustand homogen eingemischt, bevor die Dosierung in den erfindungsgemäßen Prozeß erfolgt. Die genannten Hydrophobiermittel, wie z. B. Silan-Kupplungsmittel, können gegebenenfalls auch dem Aggomerierungsprozeß in der Vorbehandlungsstufe zugegeben werden. Bei der Agglomerierung wird der Füllstoff homogen in das agglomerierte Teilchen eingebettet.

In einer bevorzugten Ausführungsform des Verfahrens wird ein Teil der vorbehandelten Suspension, nachdem er die Homogenisierungszone in der Vorbehandlungsstufe passiert hat, aus dem Durchfluß ausgeschleust und über eine Kreislaufleitung in die Vorbehandlungsstufe zurückgeführt, gegebenenfalls mit einer Pumpe, welche eventuell auch suzätzlichezerkleinernde und/oder homogenisierende Wirkung beitragen kann. Vorzugsweise liegt das Verhältnis von zurückgeführtem zum durchlaufenden Anteil zwischen 1 : 1 und 5 : 1.

Das erfindungsgemäße Verfahren zur Agglomerierung von aus der Schmelze nicht verarbeitbaren TFE-Polymerisatpulvern ermöglicht es in kontinuerlicher Arbeitsweise, derartige agglomerierte Pulver zu erzeugen, die in ihren Produkteigenschaften den aus diskontinuierlichen Prozessen stammenden Pulvern zumindest ebenbürtig, teilweise aber weit überlegen sind. Die Agglomerate werden erhalten in einer gleichmäßigen Produktqualität, insbesondere hinsichtlich ihres Schüttgewichts, ihrer engen Kornverteilung, ihrer Rieselfähigkeit und ihrer Kornstabilität. Das erfindungsgemäße Verfahren ist jedoch erheblich wirtschaftlicher und kostengünstiger durchzuführen als diskontinuierliche Prozesse, es bietet die Möglichkeit einer automatischen Steuerung im Ganzen oder in Teilen. Außerdem werden zahlreiche manuelle Arbeitsschritte vermieden, so daß die Gefahr punktförmiger Verunreinigungen praktisch ausgeschlossen wird. Dies ist bei TFE-Polymerisaten von ganz besonderer Wichtigkeit, da solche Verunreinigungen bei der Sinterung als sichtbare schwarze Punkte auftreten können und außerdem beispielsweise die Bildung elektrischer Poren bewirken und somit die Durchschlagfestigkeit von Isolationen herabsetzen.

In der Literatur ist mehrfach schon beschrieben worden, daß modifizierte TFE-Polymerisate einem Agglomerierungsprozeß unterworfen wurden. Jedoch hat es sich gezeigt, daß insbesondere im Fall perfluorierter Ether als Modifizierungsmittel hier nur Produkte erhalten werden können, die den zum Stand der Technik gehörigen unmodifizierten Polymerisaten, insbesondere bezüglich ihrer Rieselfähigkeit, ihres Schüttgewichts und ihrer Kornsta bilität, nicht gleichwertig sind. Nach dem erfindungsgemäßen Verfahren ist es möglich geworden, solche mit perfluorierten Ethern modifizierte TFE-Polymerisate erstmals mit den gleichen günstigen Eigenschaften herzustellen.

Gegenstand der Erfindung sind somit auch agglomerierte Formpulver, bestehend aus Teilchen eines aus der Schmelze nicht verarbeitbaren Tetrafluorethylen-Polymerisates mit einer spezifischen Oberfläche, gemessen nach der BET-Methode von 0,5 bis 4 $m^2/g$, das dadurch gekennzeichnet ist, daß es

a) 0,001 bis 1 Gew.-% an copolymerisierten Einheiten eines perfluorierten Vinylethers der Formel

$$CF_2 = CF—O—X,$$

worin X einen Perfluoralkyl-Rest mit 1 bis 4 C-Atomen oder einen Rest der Formel

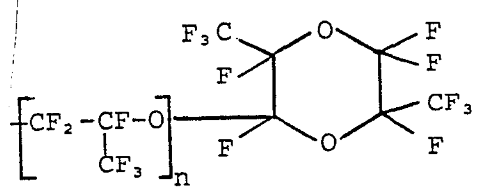

bedeutet und n = 0 bis 1 ist, sowie copolymerisierte Einheiten des Tetrafluorethylens enthält,

b) im wesentlichen aus Agglomeraten mit einem mittleren Teilchendurchmesser $d_{50}$ von 150 bis 1 000 μm besteht, welche aus Primärteilchen mit einem mittleren Teilchendurchmesser $d_{50}$ von 20 bis 80 μm aufgebaut sind und eine sphäroide Form und einheitliche dichte Oberfläche besitzen,

c) ein Schüttgewicht von mindestens 700 g/l aufweist

d) eine Rieselfähigkeit von 8,0 bis 4,0 s/50 g bei einem mittleren Agglomerat-Durchmesser $d_{50}$ von 150 bis 250 μm sowie von 4,0 bis 1,5 s/50 g bei einem Agglomerat-Durchmesser $d_{50}$ von 250 bis 1 000 μm besitzt,

e) eine Kornstabilität von 8,0 bis 4,0 s/50 g bei einem mittleren Agglomerat-Durchmesser $d_{50}$ von 150 bis 250 μm sowie von 4,0 bis 1,8 s/50 g bei einem Agglomerat-Durchmesser $d_{50}$ von 250 bis 1 000 μm hat,

f) einen Anteil von mehr als 50 Gew.-% an Agglomeraten aufweist, deren Teilchendurchmesser mindestens das 0,7 fache und höchstens das 1,3 fache des mittleren Teilchendurchmessers $d_{50}$ beträgt,

g) daß ein daraus hergestellter Form-körper einen Schweißfaktor von mindestens 0,60 aufweist, sowie daß

h) die Porenzahl, gemessen als elektrische Fehlstellen an einer aus diesem agglomerierten Formpulver hergestellten 200 μm dicken Schälfolie bei einer Spannung von 5 000 V, höchstens 15 Poren/$m^2$ beträgt.

Die genannten Pulver besitzen vorzugsweise einen Anteil an den genannten perfluorierten Ethern von 0,01 bis 0,5 Gew.-%, einen mittleren Teilchendurchmesser der Agglomerate von 150 bis 800 µm, insbesondere von 250 bis 750 µm, einen mittleren Teilchendurchmesser der Primärteilchen in den Agglomeraten von 20 bis 50 µm, ein Schüttgewicht von 700 bis 1 000, insbesondere 800 bis 1 000 g/l, eine Rieselfähigkeit von 6,0 bis 3,0 s/50 g bei $d_{50}$ von 150 bis 250 µm sowie von 3,0 bis 1,5 s/50 g bei $d_{50}$ von 250 bis 1 000 µm, ferner eine Kornstabilität von 6,0 bis 3,0 s/50 g bei $d_{50}$ von 150 bis 250 µm und von 3,0 bis 1,8 bei $d_{50}$ von 250 bis 1 000 µm. Der Anteil von agglomerierten Teilchen mit einem Durchmesser innerhalb des 0,7fachen bis 1,3fachen des mittleren Teilchendurchmessers $d_{50}$ beträgt vorzugsweise 50 bis 75, besonders bevorzugt 60 bis 75 Gew.-%, der Schweißfaktor liegt vorzugsweise bei 0,60 bis 1,0, besonders bevorzugt bei 0,80 bis 1,0, die Porenzahl bei 15 bis 0, vorzugsweise bei 6 bis 0 Poren/$m^2$. Sie besitzen ferner eine Deformation unter Last, gemessen nach ASTM D-621 an daraus hergestellten Prüfkörpern, von höchstens 15 (bis herunter zu 5), vorzugsweise von 12 bis 5 %.

Die erfindungsgemäßen agglomerierten Formpulver, bestehend aus Teilchen eines aus der Schmelze nicht verarbeitbaren Tetrafluorethylen-Polymerisats mit dem genannten Gehalt an copolymerisierten Einheiten der angebenen perfluorierten Vinylether zeichnen sich vor allem durch sehr gute elektrische Isoliereigenschaften aus. So überrascht ihre hohe elektrische Durchschlagsfestigkeit, welche sich vor allem in den gemessenen Zahlen von Poren pro Quadratmeter einer 200 µm dicken Schälfolie ausdrückt. Während bei agglomerierten Formpulvern des Tetrafluorethylens, das heißt ohne Gehalt an Modifizierungsmittel, gegenüber dem feingemahlenen Ausgangspulver als unerwünschte Folge des Agglomerierungsprozesses ein starker Abfall der Porenzahl eintritt, ist dies bei der Agglomeration zu den erfindungsgemäßen, modifizierten Formpulvern nur in ganz geringem Ausmaß der Fall.

Daher sind die erfindungsgemäßen agglomerierten Formpulver mit einem Gehalt an den genannten perfluorierten Vinylethern als Modifizierungsmittel den herkömmlichen nicht-modifizierten, aber agglomerierten Formpulvern in dieser Hinsicht weit überlegen.

Die nach dem erfindungsgemäßen Verfahren erhaltenen feinteiligen, agglomerierten Formpulver (bis 240 µm) eignen sich besonders zur Herstellung von dünnen Schälfolien, für das isostatische Pressen sowie für die Herstellung von Platten. Die etwas grobteiligeren Agglomerate (über 250 µm) werden beim automatischen Pressen dünnwandiger Teile, wie zum Beispiel Platten, Stäbe und Rohre, aber auch für die Ramextrusion (zum Beispiel im Niederdruckbereich) eingesetzt.

Folgende Bestimmungsmethoden wurden im Rahmen dieser Erfindung angewandt:

1) Mittlerer Teilchendurchmesser ($d_{50}$)

Die Bestimmung erfolgt durch Siebanalyse nach der DIN-Norm 53 477, bei einer Rüttelzeit von 10 min, wobei für die Bestimmung des mittleren Teilchendurchmessers $d_{50}$ der Grobanteil mit Teilchendurchmessern $>$ 1 500 µm außer Betracht bleibt.

2) Bestimmung des Grobanteils

Mittels eines 1 500 µm-Siebes wird das Grobgut abgesiebt und der Anteil in Gew.-% angegeben (Tabelle II).

3) Schüttgewicht

Die Bestimmung erfolgt nach Abtrennung der Grobanteile (mit einem Teilchendurchmesser über 1 500 µm) nach DIN-Norm 53 468.

4) Rieselfähigkeit

Ein mit polytetrafluorethylen beschichteter Aluminiumtrichter mit einem inneren Durchmesser (oben) von 74 mm, einem inneren Durchmesser (unten) von 12 mm und einer Höhe von 89 mm ist an einem handelsüblichen Vibrator so befestigt, daß der Abstand vom Motorengehäuse des Vibrators bis zur Trichtermitte 90 bis 100 mm beträgt. In den Trichter werden 50 g Produkt eingefüllt, der Vibrator mit einer Schwingungsbreite von 0,5 bis 1 mm wird eingeschaltet, und es wird die Zeit von der Freigabe der Trichteröffnung bis zum gänzlichen Leerlaufen des Trichters gemessen. Die Rieselfähigkeit des Pulvers ist umso besser, je kürzer die Auslaufzeit ist. Vor Messung der Rieselfähigkeit werden die Grobanteile $>$ 1 500 µm abgetrennt.

5) Kornstabilität

In einem Aluminiumbecher mit einem inneren Durchmesser von 100 mm und einer Höhe von 150 mm werden 50 g Pulver eingefüllt und 5 min bei 200 U/min gerührt. Der mit zwei Flügeln ausgestattete Rührer wird über einen Stift und eine entsprechende Vertiefung im Boden des Bechers geführt. Der Abstand von Rührerblatt-Unterkante zum Boden beträgt 1,5 mm. Die Rührerblätter mit einer Dicke von 1,5 mm, einer Breite von 25 mm und einer Länge von 46 mm stehen in einem Winkel von 45° zur Rührerwelle und einem

Winkel von 90° zueinander. Die Kanten der Flügelblätter sind leicht gerundet. Zur Vermeidung von ekektrostatischer Aufladung wird dem Produkt ca. 0,1 g Aluminiumoxid vor Beginn des Rührens zugesetzt. Auch bei dieser Messung werden vorher die Grobanteile > 1 500 µm abgetrennt.

Von dem im Aluminiumbecher gerührten Produkt wird sodann die Rieseltähigkeit, wie unter 4) angegeben, bestimmt. Dieser nach mechanischer Beanspruchung erhaltene Rieselfähigkeitswert wird als Maß für die Kornstabilität herangezogen. Ein Vergleich des Rieselfähigkeitswerte des Pulvers vor und nach der Rührbehandlung erlaubt eine Aussage darüber, inwieweit das Korn bei der mechanischen Beanspruchung zerstört wurde.

6) Bestimmung des Gewichtsanteils der Teilchen mit dem 0,7- bis 1,3fachen Durchmesser des $d_{50}$-Wertes

Zu diesem Zweck errechnet man aus dem $d_{50}$-Wert durch Multiplikation den 0,7fachen bzw. den 1,3fachen Wert und bestimmt durch Auftragung der Punkte in einer Kumulativkurve den Gewichtsanteil.

7) Bestimmung des Gehaltes an Perfluor (alkylvinyl)-ether (PAVE)

Der Gehalt an PAVE der erfindungsgemäß hergestellten Polymerisate kann durch Stoffbilanz ermittelt werden, indem man die dem Reaktor zugeführte Gesamtmenge, abzüglich der nach der Polymerisation im Reaktor verbleibenden Menge an monomerem PAVE bestimmt.

Ferner steht zur Verfügung eine Analysenmethode mit Hilfe der IR-Spektroskopie zur Bestimmung des Gehaltes an Perfluor (propylvinyl)-ether im Polymeren, die in der DE-OS 2 416 452 eingehend beschrieben wird.

8) Spezifische Rührenergie

Es wird die Leistungsaufnahme der Rührorgane bei verschiedenen Drehzahlen im jeweiligen leeren Gefäß in Watt gemmessen. Dann wird das flüssige Medium in der den stationären Zustand des Kontinuums nach dem erfindungsgemäßen Verfahren benötigten Menge und Art eingefüllt und die Messung wiederholt. Die spezifische Rührenergie für eine bestimmte Rührerdrehzahl ergibt sich dan wie folgt :

$$\text{Spezifische Rührenergie (W/l)} = \frac{{}^{L}(\text{gefüllt})\ ^{(W)}\text{-}{}^{L}(\text{leer})^{(W)}}{\text{Füllmenge (l)}}$$

wobei $^{L}$(gefüllt) und $^{L}$(leer) die bei einer bestimmten Drehzahl gemessenen Leistungsaufnahmen in Watt im gefüllten und leeren Zustand des Gefäßes sind.

9) Spezifische Oberfläche

Sie wird gemessen mit einem Gerät vom Typ Areatron (Hersteller: Fa. Leybold, Köln) nach der Methode von S. Brunauer, P. Emmet und E. Teller ; siehe J. Amer. Chem. Soc. *60* (1938) Seite 309 (BET-Methode).

10) Porenzahl

Aus dem agglomerierten Formpulver wird ein Vollzylinderblock mit einem Durchmesser von 100 mm und einer Höhe von 120 mm durch Pressen ineiner zylindrischen Form bei einem Druck von 35 N/mm² hergestellt. Dieser Block wird anschließend gesintert, indem man ihn zunächst mit einer Aufheizgeschwindigkeit von 45 °C/h auf eine Temperatur von 380 °C bringt, bei dieser Temperatur 4 Stunden beläßt und dann mit einer Geschwindigkeit von 45 °C/h abkühlt. Von diesem Block wird anschließend eine 200 µm starke Folie abgeschält. Diese 120 mm breite und 200 µm dicke Schälfolie wird über ein Rollensystem an einer Aluminiumfolie vorbeigeführt, an welcher 5 000 Volt Gleichspannung anliegen. Die gegenüberliegende Walze ist geerdet. Gemessen wird 1 m² der Folie. Die Porenzahl wird mittels Zählwerk registriert. Angabe des Ergebnisses in Poren/m².

11) Deformation unter Last

Die Bestimmung erfolgt nach ASTM-D 621 bei 20 °C an runden Prüfkörpern von 10 mm Durchmesser und 10 mm Dicke.

12) Schweißfaktor

Aus dem agglomerierten Formpulver werden Vollazylinder mit 45 mm Durchmesser und 45 mm Länge (Gewicht 150 g) bei einem Druck von 15 N/mm² verpreßt. Jeweils zwei dieser Zylinder werden ohne

Belastung in einer Messinghülse von 48 mm Durchmesser wie folgt gesintert : 8 h Aufheizen von 20 bis 380 °C mit einer linearen Aufheizgeschwindigkeit von 45 °C/h. 4 h Halten der Temperatur, 8 h Abkühlen von 380 °C auf 20 °C mit einer linearen Abkühlgeschwindigkeit von 45 °C/h.

Dieser Sinter- und Abkühlvorgang wird wiederholt. Aus den so erhaltenen, verschweißten Körpern werden Prüfkörper gedreht, die in der Mitte (außerhalb des Einspannbereichs) einen Durchmesser von 20 mm aufweisen. In gleicher Weise werden Vergleichs-Prüfkörper hergestellt, die unverschweißt sind (das heißt, von Vornherein in der vollen Länge von 90 mm verpreßt werden). Diese Prüfkörper werden einem Zugversuch zur Bestimmung der Zugfestigkeit bis zum Abriß unterworfen, wobei nach den Richtlinien der DIN-Norm 53 455 Verfahren und mit einer Abzugsgeschwindigkeit von 30 mm/min gearbeitet wird. Der Schweißfaktor ist der Quotient von Zugkraft beim Abriß der verschweißten, geteilt durch die Zugkraft beim Abriß der unverschweißten Probe.

Die Erfindung wird durch folgende Beispiele erläutert :

## Beispiel 1

In einem vertikal angeordneten, zylindrischen 30-Liter-Gefäß länglicher Bauart, das mit zwei Stromstörern ausgerüstet ist, wird unter Rührung vollentsalztes Wasser, Benzin (Kp 80 bis 110 °C) und feingemahlenes Tetrafluorethylen-Polymerisat-Pulver, modifiziert mit 300 ppm Perfluor(propylvinyl)-ether, kontinuierlich zugegeben. Das auf 50 °C vorerhitzte Wasser und das Benzin werden zuvor über einen statischen Mischer in der Zuleitung homogenisiert und über ein Tauchrohr in die Nähe der Dispergierscheibe eingeleitet. Das feingemahlene Tetrafluorethylen-Polymerisat-Pulver, dessen Daten in Tabelle I bezeichnet sind, wird von einem Dosierbunker über eine Rüttelrinne von oben in das Gefäß eingetragen. Das Verhältnis organische Flüssigkeit zu Wasser und Primärpulver zu organischer Flüssigkeit ist jeweils aus Tabelle I ersichtlich. Auf einer gemeinsamen Rührwelle befinden sich drei Rührorgane, deren Durchmesser jeweils das 0,45 fache des Gefäßdurchmessers beträgt. Im oberen Drittel (Förderstufe) befindet sich ein dreiflügliger Propellerrührer, im mittleren Drittel eine sogenannte Dispergierscheibe, an deren Umfang beidseitig blattförmige Zähne gegen die Scheibe angebracht sind, und im unteren Drittel eine Doppelturbine. Die Rührenergie beträgt während des ganzen Versuches in diesem Vorbehandlungsgefäß 29 W/l, die mittlere Verweilzeit 6 min. Nach dem Austragen aus diesem Vorbehandlungsgefäß gelangt die Suspension in ein weiteres vertikal angeordnetes, längliches und zylindrisches, 55 Liter fassendes Gefäß mit zwei Stromstörern (Agglomerierzone), auf dessen Rührwelle in gleichmäßigen Abständen vier dreiflüglige Propellerrührer angebracht sind, die einen Druchmesser des 0,5 fachen Gefäßdurchmessers haben. Die Rührleistung hier beträgt während des Versuchs 10 W/l. Nach Austrag aus der Homogenisierzone gelangt die Suspension dann in ein horizontal angeordnetes, zylindrisches Gefäß von 80 Liter Inhalt, dessen Verhältnis von Länge zu Durchmesser 10 : 1 ist. Als Rührorgan wird hier ein auf einer gemeinsamen Welle angebrachtes Rührelement verwendet, das aus 48 Rührerkränzen von jeweils vierblättrigen Scheibenrührern mit rechteckigen, 1 cm breiten Rührblättern besteht. Die Rührleistung dieser Nachbehandlungszone beträgt 16 W/l. Die Temperatur über alle Stufen des Verfahrens hinweg wird bei 50 °C gehalten. Die einzelnen Gefäße sind auf unterschiedlicher Höhe installiert, so daß der Durchfluß unter Einfluß des Schwerkraft vonstatten geht, und sie sind miteinander durch kurze Rohrleitungen verbunden. Der gleichbleibende Füllstand der Gefäße wird während des Versuchs durch die gleichmäßige, kontinuierliche Zugabe der Komponenten und durch die gesteuerte Abgabe an Suspension vom letzten Rührgefäß an die Trocknungsapparatur gehalten. Die Entfernung des Benzins und des Wassers wird in einem mehrstufigen kontinuierlichen Trocknungsverfahren mit Rückgewinnung des Benzins bewerkstelligt, wobei Temperaturen von 260 bis 290 °C angewandt werden. Anschließend wird das so erhaltene Pulver über eine Abkühlzone auf ein Rüttelsieb mit einer Maschenweite von 1 500 µm geführt, wo die Abtrennung des Grobguts erfolgt. Die Eigenschaften des erhaltenen Produkts wie auch diejenigen der Produkte der folgenden Beispiele sind in Tabelle II und III verzeichnet.

Die in den folgenden Beispielen 2 bis 16 vorgenommenen Variationen des Verfahrens hinsichtlich Ausgangsprodukt (Primärpulver), Temperatur, durchschnittlicher Verweilzeit und spezifischer Rührenergie in den einzelnen Stufen sind in Tabelle I angegeben. Folgende zusätzlichen Veränderungen der Versuchsbedingungen wurden dabei vorgenommen :

## Beispiele 2, 4, 5 und 6 •

Im Gefäß der Vorbehandlungsstufe ist in der Homogenisierzone anstelle einer Doppelturbine ein Doppelkreiselrührer angebracht.

## Beispiel 3

Im Gefäß der Agglomerierungsstufe befinden sich nur drei Propellerrührer, angeordnet in gleichmäßigen Abständen auf der Rührerwelle.

Beispiel 7

Benzin und Wasser werden in die Vorbehandlungsstufe ohne Vormischung zugegeben, die Mischung erfolgt ausschließlich in der gemeinsamen Zuleitung.

Beispiel 9

An der Verbindungsleitung zwischen Vorbehandlungs- und Agglomerierungsstufe ist eine Kreislaufleitung abgezweigt, die zurück in die Vorbehandlungsstufe führt. Dort werden 3 Volumenteile des die Vorbehandlungsstufe verlassenden suspendierten Produkts mit einer Pumpe in diese Vorbehandlungsstufe zurückgeführt, während 1 Teil in die Agglomerierungsstufe durchfließgt.

Beispiel 11

In der Dispergierzone der Vorbehandlungsstufe ist anstelle der Dispergierscheibe ein Doppelkreiselrührer angebracht.

Beispiel 12

Das Produkt wird bei 150 °C getrocknet.

Beispiel 14

Das Produkt wird bei 160 °C getrocknet.

Beispiel 15

Das Primärpulver wird vor Dosierung in den Agglomerierungsprozeß im trockenen Zustand mit 15 Gew.-% entschlichteter Glasfaser (durchschnittliche Länge 50 µm, Durchmesser 15 bis 25 µm) homogen vermischt.

Beispiel 16

Das Primärpulver wird vor dem Agglomerierungsprozeß mit 10 Gew.-% Kohlepulver (nach DIN 80) homogen vermischt.

(Siehe Tabelle 1 Seite 12 ff.)

Tabelle I

| Beispiel Nr. | Org. Flüssigkeit: Art | Org. Flüssigkeit: Volumenverhältnis organische Flüssigkeit/Wasser | TFE-Polymerisat (Primärpulver): Art (Modifizierung Menge in ppm) *** | TFE-Polymerisat (Primärpulver): Gew./Vol.-Verhältnis Primärpulver/org. Flüssigkeit | TFE-Polymerisat (Primärpulver): $d_{50}$ (µm) | TFE-Polymerisat (Primärpulver): Schüttgewicht (g/l) | Stufe a) Temperatur (°C) | Stufe a) Durchschnittliche Verweilzeit (min) | Stufe a) Spez. Rührenergie (W/l) | Stufe b) Temperatur (°C) | Stufe b) Durchschnittliche Verweilzeit (min) | Stufe b) Spez. Rührenergie (W/l) | Stufe c) Temperatur (°C) | Stufe c) Durchschnittliche Verweilzeit (min) | Stufe c) Spez. Rührenergie (W/l) |
|---|---|---|---|---|---|---|---|---|---|---|---|---|---|---|---|
| 1 | Benzin * | 1 : 14 | 300 | 2,5 : 1 | 50 | 425 | 50 | 6 | 29 | 50 | 9 | 10 | 50 | 12 | 16 |
| 2 | Benzin * | 1 : 11 | 300 | 2,0 : 1 | 50 | 380 | 22 | 6 | 29 | 22 | 9 | 10 | 22 | 12 | 23 |
| 3 | Benzin * | 1 : 14 | 300 | 2,5 : 1 | 40 | 380 | 50 | 6 | 29 | 50 | 9 | 3 | 50 | 12 | 16 |
| 4 | Benzin * | 1 : 17 | 200 | 4,0 : 1 | 30 | 350 | 25 | 6 | 29 | 25 | 9 | 12 | 25 | 12 | 25 |
| 5 | Benzin * | 1 : 17 | 300 | 3,3 : 1 | 40 | 380 | 45 | 6 | 10 | 45 | 9 | 2 | 30 | 12 | 5,5 |
| 6 | Benzin * | 1 : 11 | Homo-polym. | 2,0 : 1 | 60 | 420 | 24 | 6 | 29 | 35 | 9 | 5 | 40 | 12 | 5,5 |
| 7 | Benzin * | 1 : 8 | 300 | 2,5 : 1 | 40 | 380 | 24 | 10 | 10 | 30 | 13 | 10 | 30 | 18 | 20 |
| 8 | Benzin * | 1 : 25 | Homo-polym. | 3,7 : 1 | 55 | 400 | 38 | 12 | 10 | 40 | 18 | 10 | 40 | 24 | 20 |
| 9 | Benzin * | 1 : 14 | 300 | 2,5 : 1 | 35 | 380 | 50 | 6 | 29 | 50 | 9 | 5 | 50 | 12 | 16 |
| 10 | Benzin * | 1 : 11 | 1000 | 2,0 : 1 | 25 | 450 | 50 | 6 | 29 | 50 | 9 | 10 | 50 | 12 | 16 |

*) Kp 80 bis 110
***) Perfluor(propylvinyl) ether

Tabelle I (Fortsetzung)

| | Org. Flüssigkeit | | TFE-Polymerisat (Primärpulver) | | | | Stufe a) | | | Stufe b) | | | Stufe c) | | |
|---|---|---|---|---|---|---|---|---|---|---|---|---|---|---|---|
| Beispiel Nr. | Art | Volumenverhältnis organische Flüssigkeit/Wasser | Art (Modifizierung Menge in ppm) *** | Gew./Vol.-Verhältnis Primärpulver/org. Flüssigkeit | $d_{50}$ (µm) | Schüttgewicht (g/l) | Temperatur (°C) | Durchschnittliche Verweilzeit (min) | Spez. Rührenergie (W/l) | Temperatur (°C) | Durchschnittliche Verweilzeit (min) | Spez. Rührenergie (W/l) | Temperatur (°C) | Durchschnittliche Verweilzeit (min) | Spez. Rührenergie (W/l) |
| 11 | Benzin * | 1 : 11 | Homo-polym. | 2,0 : 1 | 35 | 420 | 20 | 6 | 29 | 50 | 9 | 10 | 50 | 12 | 16 |
| 12 | Perchlorethylen | 1 : 11 | 300 | 1,8 : 1 | 40 | 380 | 50 | 6 | 29 | 50 | 9 | 5 | 50 | 12 | 16 |
| 13 | Benzin** | 1 : 12 | 300 | 2,5 : 1 | 40 | 350 | 75 | 6 | 29 | 75 | 9 | 5 | 75 | 12 | 16 |
| 14 | Trifluortrichlorethan | 1 : 10 | 300 | 2,0 : 1 | 40 | 390 | 15 | 6 | 29 | 15 | 9 | 5 | 15 | 12 | 16 |
| 15 | Benzin* | 1 : 10 | 300 | 2,5 : 1 | 50 | 390 | 50 | 6 | 29 | 50 | 9 | 5 | 50 | 12 | 16 |
| 16 | Benzin* | 1 : 10 | 300 | 2,7 : 1 | 30 | 390 | 50 | 6 | 29 | 50 | 9 | 5 | 50 | 12 | 16 |

*) Kp 80 bis 110

**) Kp 170 bis 200

***) Perfluor(propylvinyl) ether

Tabelle II

| Beispiel Nr. | $d_{50}$ (µm) | Schüttgewicht (g/l) | Abgetr.Grobanteil >1500 µm (Gew.-%) | Rieselfähigkeit (s/50 g) | Kornstabilität (s/50 g) | Anteil 0,7 bis 1,3faches von $d_{50}$ (Gew.-%) |
|---|---|---|---|---|---|---|
| 1 | 380 | 880 | 3,1 | 2,5 | 2,5 | 52 |
| 2 | 900 | 780 | 3,8 | 3,0 | 4,0 | 50 |
| 3 | 360 | 890 | <0,1 | 2,4 | 2,7 | 53 |
| 4 | 180 | 760 | 0,2 | 8 | 8 | 52 |
| 5 | 215 | 740 | 0,3 | 8 | 7 | 51 |
| 6 | 750 | 740 | 3,5 | 2,7 | 3,0 | 51 |
| 7 | 395 | 805 | 0,8 | 3,1 | 3,2 | 55 |
| 8 | 250 | 830 | 0,4 | 3,8 | 3,5 | 47 |
| 9 | 395 | 880 | 0,2 | 2,7 | 2,6 | 53 |
| 10 | 280 | 810 | <0,1 | 2,1 | 2,9 | 62 |
| 11 | 370 | 850 | 1,1 | 2,3 | 2,6 | 42 |
| 12 | 400 | 850 | 0,3 | 2,1 | 2,2 | 61 |
| 13 | 700 | 840 | 1,4 | 1,9 | 2,5 | 62 |
| 14 | 710 | 790 | 1,6 | 2,7 | 3,5 | 60 |
| 15 | 700 | 795 | 1,4 | 2,5 | 2,8 | 61 |
| 16 | 460 | 720 | 0,8 | 3,0 | 3,0 | 52 |

Tabelle III

| Beispiel Nr. | Schweißfaktor | Porenzahl (Poren/m²) | Deformation unter Last (%) | Scherviskosität GPa s | $\Delta H_u$ | $\Delta H_s$ | Kristallit dicke |
|---|---|---|---|---|---|---|---|
| 1 | 1,00 | 5 | 13 | 78 | 0,10 | 0,73 | 975 |
| 2 | 0,90 | 6 | 12 | 72 | 0,11 | 0,70 | 960 |
| 3 | 1,00 | 4 | 13 | 50 | 0,10 | 0,73 | 975 |
| 4 | 0,95 | 5 | 12 | 55 | 0,12 | 0,71 | 1100 |
| 5 | 0,97 | 6 | 13 | 80 | 0,10 | 0,74 | 950 |
| 6 | 0,70 | 8 | 14 | 500 | 0,17 | 0,55 | 1950 |
| 7 | 0,85 | 3 | 12 | 75 | 0,11 | 0,73 | 920 |
| 8 | 0,73 | 5 | 13 | 630 | 0,17 | 0,51 | 1850 |
| 9 | 1,00 | 4 | 13 | 46 | 0,10 | 0,73 | 975 |
| 10 | 1,00 | 2 | 9 | 24 | 0,12 | 0,73 | 500 |
| 11 | 0,70 | 7 | 15 | 704 | 0,18 | 0,54 | 2000 |
| 12 | 0,80 | 5 | 13 | 85 | 0,11 | 0,70 | 960 |
| 13 | 0,81 | 4 | 12 | 75 | 0,10 | 0,73 | 980 |
| 14 | 0,90 | 6 | 13 | 83 | 0,11 | 0,70 | 950 |
| 15 | 0,95 | 8 | 12 | 78 | 0,10 | 0,73 | 975 |
| 16 | 0,85 | 3 | 12 | 65 | 0,11 | 0,71 | 910 |

**Patentansprüche**

1. Verfahren zur kontinuierlichen Herstellung eines agglomierten Formpulvers aus einem aus der Schmelze nicht verarbeitbaren, körnigen Tetrafluorethylenpolymerisat-Primärpulver mit einem mittleren Teilchendurchmesser $d_{50}$ der Primärteilchen von 20 bis 80 μm in einen den gesamten Prozeß durchlaufenden flüssigen Medium, bestehend aus Wasser und einer organischen Flüssigkeit, die ein solches Tetrafluorethylen-Polymerisat zu benetzen vermag und in Wasser zu höchstens 15 Gew.-% löslich ist, wobei das Gewicht/Volumen-Verhältnis von Primärpulver zu organischer Flüssigkeit 7 : 1 bis 1,3 : 1 und das Volumen/Volumen-Verhältnis von organischer Flüssigkeit zu Wasser 1 : 1,4 bis 1 : 50 beträgt, unter mechanischer Bewegung bei Temperaturen von 5 bis 90 °C, dadurch gekennzeichnet, daß das Primärpulver zusammen mit dem flüssigen Medium eine dreistufige Kastade durchläuft, wobei zunächst das Primärpulver, das Wasser und die organische Flüssigkeit im genannten Verhältnis

a) kontinuierlich in eine mit dem flüssigen Medium gefüllte Vorbehandlungsstufe eingetragen und in dieser fortbewegt werden, wobei das Primärpulver zuerst in einer Förderzone durch ein die Förderung bewirkendes Rührorgan in das flüssige Medium eingezogen und in diesem suspendiert wird, sodann in eine unmittelbar anschließende Dispergierzone gelangt und dort durch Einwirkung eines im Bereich der angewandten spezifischen Rührenergie dispergierend wirkenden Rührorgans in eine im wesentlichen gleichmäßig im flüssigen Medium feinverteilte Form gebracht wird, sodann in eine unmittelbar anschließende Homogenisierzone gelangt und dort unter Einwirkung eines turbineneförmigen Rührorgans zu Sekundärteilchen mit einem mittleren Teilchendurchmesser $d_{50}$ von etwa 100 bis etwa 400 μm voragglomeriert wird, wobei die Vorbehandlungsstufe mit einer mittleren Verweilzeit von 3 bis 30 Minuten durchlaufen wird und die dort eingebrachte spezifische Rührenergie 5 bis 100 W/l beträgt, sodann diese vorbehandelte Suspension

b) eine Agglomerierungsstufe durchläuft, bestehend aus einem vertikal angeordneten Gefäß, in dem 1 bis 8 Rührorgane angeordnet sind, die im angewandten Bereich der spezifischen Rührenergie im wesentlichen keine zerkleinernde Wirkung ausüben, wobei das voragglomerierte Primärpulver unter Erzeugung einer ausreichenden Teilchenberührung im flüssigen Medium zu einem Pulver mit Tertiärteilchen eines mittleren Teilchendurchmessers $d_{50}$ von 150 bis 1 000 μm weiteragglomeriert wird, und wobei die Agglomerierungsstufe mit einer mittleren Verweilzeit von 5 bis 50 Minuten durchlaufen wird und die dort eingebrachte spezifische Rührenergie 2 bis 30 W/l beträgt, danach diese Suspension

c) durch eine Nachbehandlungsstufe geführt wird, gebildet aus mindestens einem horizontal angeordneten Gefäß, wobei das Verhältnis Gefäß-Gesamtlänge zu Durchmesser mindestens 2 : 1 beträgt und in diesem Gefäß oder diesen Gefäßen eine Vielzahl von Rührkränzen mit jeweils mindestens 3 und höchstens 8 Blättern vom Typ des Scheibenrührers angeordnet sind, wo unter Einhaltung einer mittleren Verweilzeit von 6 bis 60 Minuten und unter Einwirkung des vielblättrigen Rührorgans, das eine spezifische Rührenergie von 5 bis 30 W/l in die Suspension einbringt, die endgültige Ausbildung der Teilchenform ohen wesentliche weitere Veränderung der mittleren Teilchengröße erfolgt, und schließlich

d) aus der Nachbehandlungsstufe kontinuierlich abgezogen und das agglomerierte Pulver in bekannter Weise vom flüssigen Medium getrennt wird.

2. Verfahren nach Anspruch 1, dadurch gekennzeichnet, daß als dispergierend wirkendes Rührorgan eine mit am peripheren Kreisumfang beidseitig aufragenden blattförmigen Elementen ausgestattete Dispergierscheibe eingesetzt wird.

3. Verfahren nach einem der Ansprüche 1 oder 2, dadurch gekennzeichnet, daß ein Teil der vorbehandelten Suspension nach dem Passieren der Homogenisierungszone in die Vorbehandlungsstufe zurückgeführt wird.

4. Verfahren nach einem oder mehreren der Ansprüche 1 bis 3, dadurch gekennzeichnet, daß die Nachbehandlungsstufe in einem horizontal angeordneten langgestreckten Rührgefäß, dessen Verhältnis von Länge zu Durchmesser mindestens 2 : 1 beträgt, durchgeführt wird.

5. Verfahren nach einem oder mehreren der Ansprüche 1 bis 4, dadurch gekennzeichnet, daß die Vorbehandlungsstufe a) mit einer mittleren Verweilzeit von 5 bis 15 min durchlaufen wird und die eingebrachte spezifische Rührenergie 10 bis 60 W/l beträgt.

6. Verfahren nach einem oder mehreren der Ansprüche 1 bis 5, dadurch gekennzeichnet, daß die Agglomerierungsstufe b) mit einer mittleren Verweilzeit von 8 bis 20 min durchlaufen wird und die eingebrachte Rührenergie 5 bis 20 W/l beträgt.

7. Verfahren nach einem oder mehreren der Ansprüche 1 bis 6, dadurch gekennzeichnet, daß die Nachbehandlungsstufe c) mit einer mittleren Verweilzeit von 10 bis 20 min durchlaufen wird und die eingebrachte Rührenergie 10 bis 20 W/l beträgt.

8. Verfahren nach einem oder mehreren der Ansprüche 1 bis 7, dadurch gekennzeichnet, daß dem Primärpulver vor Eintragung in die Vorbehandlungsstufe 2 bis 60 Gew.-% üblicher Füllstoffe beigefügt werden.

9. Agglomeriertes Formpulver, bestehend aus Teilchen eines aus der Schmelze nicht verarbeitbaren Tetrafluorethylen-Polymerisates mit einer spezifischen Oberfläche, gemessen nach der BET-Methode von 0,5 bis 4 $m^2/g$, dadurch gekennzeichnet, daß es

a) 0,001 bis 1 Gew.-% an copolymerisierten Einheiten eines perfluorierten Vinylethers der Formel

$CF_2 = CF—O—X,$

worin X einen Perfluoralkyl-Rest mit 1 bis 4 C-Atomen oder einen Rest der Formel

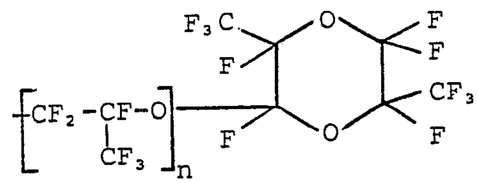

bedeutet und n = 0 bis 1 ist, sowie copolymerisierte Einheiten des Tetrafluorethylens enthält,

b) im wesentlichen aus Agglomeraten mit einem mittleren Teilchendurchmesser $d_{50}$ von 150 bis 1 000 µm besteht, welche aus Primärteilchen mit einem mittleren Teilchendurchmesser $d_{50}$ von 20 bis 80 µm aufgebaut sind und eine sphäroide Form und einheitliche dichte Oberfläche besitzen,

c) ein Schüttgewicht von mindestens 700 g/l aufweist,

d) eine Rieselfähigkeit von 8,0 bis 4,0 s/50 g bei einem mittleren Agglomerat-Durchmesser $d_{50}$ von 150 bis 250 µm sowie von 4,0 bis 1,5 s/50 g bei einem Agglomerat-Durchmesser $d_{50}$ von 250 bis 1 000 µm besitzt.

e) eine Kornstabilität von 8,0 bis 4,0 s/50 g bei einem mittleren Agglomerat-Durchmesser $d_{50}$ von 150 bis 250 µm sowie von 4,0 bis 1,8 s/50 g bei einem Agglomerat-Durchmesser $d_{50}$ von 250 bis 1 000 µm hat,

f) einen Anteil von mehr als 50 Gew.-% an Agglomeraten aufweist, deren Teilchendurchmesser mindestens das 0,7fache und höchstens das 1,3fache des mittleren Teilchendurchmessers $d_{50}$ beträgt,

g) daß ein daraus hergestellter Formkörper einen Schweißfaktor von mindestens 0,60 aufweist, sowie daß

h) die Porenzahl, gemessen als elektrische Fehlstellen an einer aus diesem agglomerierten Formpulver hergestellten 200 µm dicken Schälfolie bei einer Spannung von 5 000 V, höchstens 15 Poren/m$^2$ beträgt.

10. Agglomeriertes Formpulver nach Anspruch 9, dadurch gekennzeichnet, daß es

a) 0,01 bis 0,5 Gew.-% an copolymerisierten Einheiten eines perfluorierten Vinylethers der Formel

$CF_2 = CF—O—X,$

worin X einen Perfluoralkyl-Rest mit 1 bis 4 C-Atomen oder einen Rest der Formel

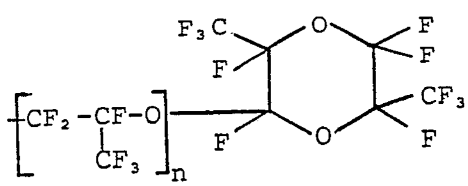

bedeutet und n = 0 bis 1 ist, sowie copolymerisierte Einheiten des Tetrafluorethylens enthält,

b) im wesentlichen aus Agglomeraten mit einem mittleren Teilchendurchmesser $d_{50}$ von 150 bis 800 µm besteht, welche aus Primärteilchen mit einem mittleren Teilchendurchmesser $d_{50}$ von 20 bis 80 µm aufgebaut sind und eine sphäroide Form und einheitliche dichte Oberfläche besitzen,

c) ein Schüttgewicht von mindestens 800 g/l aufweist,

d) eine Rieselfähigkeit von 6,0 bis 3,0 s/50 g bei einem mittleren Agglomerat-Durchmesser $d_{50}$ von 150 bis 250 µm sowie 3,0 bis 1,5 s/50 g bei einem Agglomerat-Durchmeser $d_{50}$ von 250 bis 1 000 µm besitzt,

e) eine Kornstabilität von 6,0 bis 3,0 s/50 g bei einem mittleren Agglomerat-Durchmesser $d_{50}$ von 150 bis 250 µm sowie von 3,0 bis 1,8 s/50 g bei einem Agglomerat-Durchmesser $d_{50}$ von 250 bis 1 000 µm hat,

f) einen Anteil von mehr als 60 Gew.-% an Agglomeraten aufweist, deren Teilchendurchmesser mindestens das 0,7fache und höchstens das 1,3fache des mittleren Teilchendurchmessers $d_{50}$ beträgt,

g) daß ein daraus hergestellter Formkörper einen Schweißfaktor von mindestens 0,80 aufweist, sowie daß

h) die Porenzahl, gemessen als elektrische Fehlstellen an einer aus diesem agglomierten Formpulver hergestellten 200 µm dicken Schälfolie bei einer Spannung von 5 000 V, höchstens 6 Poren/m$^2$ beträgt.

11. Agglomeriertes Formpulver nach einem oder mehreren der Ansprüche 9 und 10, dadurch gekennzeichnet, daß es sich bei den copolymerisierten Einheiten des Perfluorierten Vinylethers um solche des Perfluor(n-propylvinyl)-ethers handelt.

**Claims**

1. A process for the continuous production of an agglomerated molding powder from a granular non-melt-fabricable tetrafluoroethylene polymer primary powder having an average particle diameter $d_{50}$ of the primary particles 20 to 80 μm, in a liquid medium which passes through the whole process and consists of water and an organic liquid which is capable of wetting such a tetrafluoroethylene polymer and is soluble in water to the extent of not more than 15 % by weight, the weight/volume ratio of primary powder to organic liquid being 7 : 1 to 1.3 : 1 and the volume/volume ratio of organic liquid to water being 1 : 1.4 to 1 : 50, with mechanical agitation at temperatures of 5 to 90 °C, characterised by passing the primary powder, together with the liquid medium, through a three-stage cascade in which, initially, the primary powder, the water and the organic liquid, in the ratio mentioned,

a) are continuously introduced into a pretreatment stage filled with the liquid medium and are moved forward in the former, where the primary powder is first drawn in a conveying zone into the liquid medium, and is suspended in the latter, by means of a stirring element which effects the conveyance, then arrives in a directly adjacent dispersing zone and is there converted, by the action of a stirring element having a dispersing action within the range of the specific stirring energy applied, into a form which is essentially uniformly finely distributed within the liquid medium, then arrives in a directly adjacent homogenising zone and is pre-agglomerated there by the action of a turbine-shaped stirring element to give secondary particles having an average particle diameter $d_{50}$ of about 100 to about 400 μm, the pretreatment stage being passed through at an average dwell time of 3 to 30 minutes and the specific stirring energy introduced there being 5 to 100 W/l, this pretreated suspension then

b) passes through an agglomeration stage consisting of a vertically disposed vessel in which 1 to 8 stirring elements are mounted which, within the range of specific stirring energy applied, exert essentially no comminuting action, thereby producing an adequate contact between particles in the liquid medium, to give a powder having tertiary particles of an average particle diameter $d_{50}$ of 150 to 1,000 μm, the agglomeration stage being passed through at an average dwell time of 5 to 50 minutes and the specific stirring energy introduced there being 2 to 30 W/l, this suspension then

c) is passed through an after-treatment stage which is constituted by a horizontally disposed vessel having a total length to diameter ratio of at least 2 : 1 and in which vessel or vessels a plurality of stirrer rings each having at least 3 and not more than 8 stirrer blades of the disc stirrer type are mounted in which, by maintaining an average dwell time of 6 to 60 minutes and by the action of the multi-bladed stirrer element which introduces a specific stirring energy of 5 to 30 W/l into the suspension, the final formation of the particle shape takes place without a further essential change in the average particle size, and finally

d) is discharged continually form the after-treatment stage, and the agglomerated powder is separated from the liquid medium in a known manner.

2. The process as claimed in claim 1, characterised in that a dispersing disc equipped with blade-shaped elements projecting on both sides at the peripheral circumference is used as the stirring element having a dispersing action.

3. The process as claimed in either of claims 1 or 2, characterised in that after passing through the homogenisation zone, a part of the pretreated suspension is recycled to the pretreatment stage.

4. The process as claimed in one or more of claims 1 to 3, characterised in that the after-treatment stage is carried out in a horizontally mounted, elongated stirred vessel having a length to diameter ratio of at least 2 : 1.

5. The process as claimed in one or more of Claims 1 to 4, characterised in that the pretreatment stage a) is passed through at an average dwell time of 5 to 15 minutes and the specific stirring energy introduced is 10 to 60 W/l.

6. The process as claimed in one or more of Claims 1 to 5, characterised in that the agglomeration stage b) is passed through at an average dwell time of 8 to 20 minutes and the stirring energy introduced is 5 to 20 W/l.

7. The process as claimed in one or more of claims 1 to 6, characterised in that the after-treatment stage c) is passed through at an average dwell time of 10 to 20 minutes and the stirring energy introduced is 10 to 20 W/l.

8. The process as claimed in one or more of claims 1 to 7, characterised in that 2 to 60 % by weight of customary fillers are added to the primary powder before it is introduced into the pretreatment stage.

9. An agglomerated molding powder composed of particles of a non-melt-fabricable tetrafluoroethylene polymere which has a specific surface area, as measured by the BET method, of 0.5 to 4 $m^2/g$ and which is characterised in that it

a) contains 0.001 to 1 % by weight of copolymerised units of a perfluorinated vinyl ether of the formula

$$CF_2 = CF—O—X$$

in which X denotes a perfluoroalkyl radical having 1 to 4 C atoms or a radical of the formula

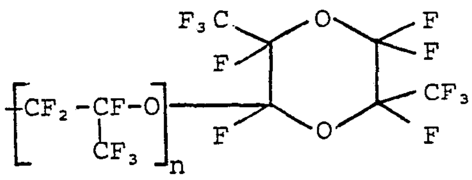

and n is 0 to 1, and also contains copolymerised units of tetrafluoroethylene,

b) is composed essentially of agglomerates having an average particle diameter $d_{50}$ of 150 to 1,000 µm which have been built up from primary particles having an average particle diameter $d_{50}$ of 20 to 80 µm and which possess a spheroidal form and an uniform, dense surface,

c) has a bulk density of at least 700 g/l,

d) has a flow time of 8.0 to 4.0 seconds/50 g at an average agglomerate diameter $d_{50}$ of 150 to 250 µm and of 4.0 to 1.5 seconds/50 g at an agglomerate diameter $d_{50}$ of 250 to 1,000 µm,

e) has a particle stability of 8.0 to 4.0 seconds/50 g at an average agglomerate diameter $d_{50}$ of 150 to 250 µm and of 4.0 to 1.8 seconds/50 g at an agglomerate diameter $d_{50}$ of 250 to 1,000 µm, and

f) has a proportion of more than 50 % by weight of agglomerates having a particle size diameter which is at least 0.7 times and not more than 1.3 times the average particle diameter $d_{50}$,

g) wherein a molded article prepared therefrom has a welding factor of at least 0.60, and

h) the pore count, measured at a voltage of 5,000 V as electrical defects on a veneer-cut film 200 µm thick prepared from the agglomerated molding powder, is not more than 15 pores/m².

10. An agglomerated molding powder as claimed in claim 9, characterised in that it

a) contains 0.01 to 0.5 % by weight of copolymerised units of a perfluorinated vinyl ether of the formula

$$CF_2 = CF—O—X$$

in which X denotes a perfluoroalkyl radical having 1 to 4 C atoms or a radical of the formula

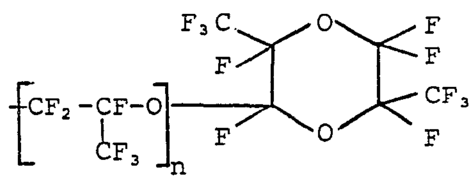

and n is 0 to 1, and also contains copolymerised units of tetrafluoroethylene,

b) is composed essentially of agglomerates having an average particle diameter $d_{50}$ of 150 to 800 µm which have been built up from primary particles having an average particle diameter $d_{50}$ of 20 to 80 µm und which possess a spheroidal form and a uniform, dense surface,

c) has a bulk density of at least 800 g/l,

d) has a flow time of 6.0 to 3.0 seconds/50 g at an average agglomerate diameter $d_{50}$ of 150 to 250 µm and of 3.0 to 1.5 seconds/50 g at an agglomerate diameter $d_{50}$ of 250 to 1,000 µm,

e) has a particle stability of 6.0 to 3.0 seconds/50 g at an average agglomerate diameter $d_{50}$ of 150 to 250 µm and of 2.0 to 1.8 seconds/50 g at an agglomerate diameter of $d_{50}$ of 250 to 1,000 µm, and

f) has a proportion of more than 60 % by weight of agglomerates having a particle diameter which is at least 0.7 times and not more than 1.3 times the average particle diameter $d_{50}$, and

g) wherein a molded article prepared therefrom has a welding factor of at least 0.80, and

h) the pore count, measured at a voltage of 5,000 V as electrical defects on a veneer-cut film 200 µm thick prepared from the agglomerated molding powder, is not more than 6 pores/m².

11. An agglomerated molding powder as claimed in one or more of claims 9 and 10, wherein the copolymerised units of the perfluorinated vinyl ether are units of perfluoro-(n-propylvinyl) ether.

**Revendications**

1. Procédé de préparation continue d'une poudre à mouler agglomérée, à partir d'une poudre primaire de polymère de tétrafluoréthylène granulaire, ne pouvant être mise en œuvre à l'état fondu, présentant une granulométrie moyenne $d_{50}$ des particules primaires de 20 à 80 µm, dans un milieu liquide traversant la totalité du procédé, constitué d'eau et d'un liquide organique qui ne peut mouiller un tel polymère de tétrafluoréthylène et dont la solubilité dans l'eau est au maximum de 15 % en poids, le rapport poids/volume entre la poudre primaire et le liquide organique étant compris entre 7 : 1 et 1,3 : 1, et le rapport volume/volume entre le liquide organique et l'eau étant compris entre 1 : 1,4 et 1 : 50, sous un mouvement mécanique, à des températures de 5 à 90 °C, caractérisé en ce que la poudre primaire traverse, en même temps que le milieu liquide, une cascade à trois étages, dans laquelle tout d'abord la poudre primaire, l'eau et le liquide organique, selon les proportions indiquées

a) sont introduits d'une manière continue dans un étage de pré-traitement rempli du milieu liquide, et y subissent un mouvement d'avance, tandis que la poudre primaire est d'abord introduite, dans une zone d'avance, à l'aide d'un organe agitateur provoquant son déplacement, dans le milieu liquide, et est mise en suspension dans ce milieu, avant d'arriver dans une zone de dispersion située immédiatement en aval et d'y prendre une forme finement divisée, essentiellement uniforme, dans le milieu liquide, sous l'effet d'un organe agitateur ayant un effet de dispersion dans le domaine de l'énergie spécifique d'agitation utilisée, avant d'arriver dans une zone d'homogénéisation située immédiatement en aval et y subir une pré-agglomération, sous l'effet d'un organe d'agitation en forme de turbine, pour donner des particules secondaires ayant une granulométrie moyenne $d_{50}$ comprise entre environ 100 et environ 400 µm, l'étage de pré-traitement étant traversé pendant un temps moyen de séjour de 3 à 30 minutes, l'énergie spécifique d'agitation utilisée y étant de 5 à 100 W/l, puis que cette suspension pré-traitée

b) traverse un étage d'agglomération, constitué d'un récipient disposé verticalement, dans lequel se trouvent 1 à 8 organes agitateurs, qui, dans le domaine utilisé de l'énergie spécifique d'agitation, n'exercent essentiellement aucun effet de fragmentation, la poudre primaire pré-agglomérée subissant, par la création d'un contact suffisant entre particules dans le milieu liquide, une post-agglomération pour se transformer en une poudre constituée de particules tertiaires ayant une granulométrie moyenne $d_{50}$ de 150 à 1 000 µm, l'étage d'agglomération étant traversé pendant un temps moyen de séjour de 5 à 50 minutes, l'énergie spécifique d'agitation qui y est appliquée étant de 2 à 30 W/l, puis que cette suspension

c) est mise à passer par un étage de post-traitement, constitué d'au moins un récipient disposé horizontalement, le rapport entre la longueur totale du récipient et son diamètre étant d'au moins 2 : 1, tandis que sont disposées dans ce récipient ou ces récipients un grand nombre de couronnes d'agitation portant chacune au moins 3 et au plus 8 pales du type agitateur à disque, et où, tout en maintenant un temps de séjour moyen de 6 à 60 minutes et sous l'action de l'organe agitateur à plusieurs pales, on applique à la suspension une énergie spécifique d'agitation de 5 à 30 W/l, la création de la forme définitive des particules s'effectue sans autre modification importante de la granulométrie moyenne, et enfin

d) est extraite en continu de l'étage de post-traitement, et la poudre agglomérée est séparée d'une manière connue du milieu liquide.

2. Procédé selon la revendication 1, caractérisé en ce qu'on utilise en tant qu'organe agitateur à effet dispersant un disque de dispersion, équipé d'éléments en forme de pales, qui dépassent des deux côtés de sa périphérie.

3. Procédé selon l'une des revendications 1 ou 2, caractérisé en ce qu'une partie de la suspension prétraitée est, après passage dans la zone d'homogénéisation, renvoyée à l'étage de pré-traitement.

4. Procédé selon une ou plusieurs des revendications 1 à 3, caractérisé en ce que l'étage de post-traitement est effectué dans un récipient avec agitateur, allongé, disposé horizontalement, présentant entre sa longueur et son diamètre un rapport d'au moins 2 : 1.

5. Procédé selon l'une ou plusieurs des revendications 1 à 4, caractérisé en ce que l'étage de prétraitement a) est traversé avec un temps moyen de séjour de 5 à 15 minutes, l'énergie spécifique d'agitation appliquée étant de 10 à 60 W/l.

6. Procédé selon l'une ou plusieurs des revendications 1 à 5, caractérisé en ce que l'étage d'agglomération b) est traversé avec un temps moyen de séjour de 8 à 20 minutes, l'énergie d'agitation appliquée étant de 5 à 20 W/l.

7. Procédé selon l'une ou plusieurs des revendications 1 à 6, caractérisé en ce que l'étage de post-traitement c) est traversé avec un temps moyen de séjour de 10 à 20 minutes, l'énergie d'agitation appliquée étant de 10 à 20 W/l.

8. Procédé selon l'une ou plusieurs des revendications 1 à 7, caractérisé en ce qu'on ajoute à la poudre primaire, avant introduction dans l'étage de pré-traitement, 2 à 60 % en poids de charges habituelles.

9. Poudre à mouler agglomérée, constituée de particules d'un polymère de tétrafluoréthylène ne pouvant être mis en œuvre à l'état fondu, présentant une aire spécifique, mesurée par la méthode BET, de 0,5 à 4 $m^2/g$, caractérisée en ce que

a) elle contient 0,001 à 1 % en poids de motifs copolymérisés d'un oxyde de vinyle perfluoré de formule

$$CF_2 = CF—O—X,$$

dans laquelle X est un radical perfluoralkyle ayant de 1 à 4 atomes de carbone ou un radical de formule

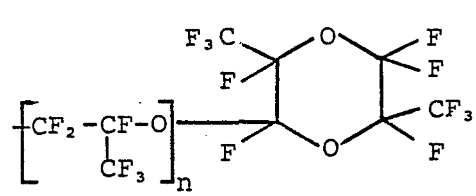

et n vaut 0 à 1, ainsi que de motifs copolymérisés du tétrafluoréthylène,

b) elle est constituée pour l'essentiel d'agglomérats ayant une granulométrie moyenne $d_{50}$ de 150 à 1 000 µm, qui sont constitués de particules primaires ayant une granulométrie moyenne $d_{50}$ de 20 à 80 µm et possèdent une forme sphéroïdale et une surface dense uniforme,

c) elle présente une masse volumique apparente d'au moins 700 g/l,

d) elle possède une fluence de 8,0 à 4,0 s/50 g pour un diamètre moyen d'agglomérat $d_{50}$ de 150 à 250 µm, et de 4,0 à 1,5 s/50 g pour un diamètre d'agglomérat $d_{50}$ de 250 à 1 000 µm,

e) elle possède une stabilité de grain de 8,0 à 4,0 s/50 g pour un diamètre moyen d'agglomérat $d_{50}$ de 150 à 250 µm, et de 4,0 à 1,8 s/50 g pour un diamètre d'agglomérat $d_{50}$ de 250 à 1 000 µm,

f) elle présente une fraction supérieure à 50 % en poids d'agglomérats dont la granulométrie est comprise entre au moins 0,7 fois et au plus 1,3 fois la granulométrie moyenne $d_{50}$,

g) qu'un article moulé préparé à partir d'elle présente un coefficient de soudage d'au moins 0,60, et que

h) le nombre de pores, mesuré par les défauts électriques d'une feuille tranchée de 200 µm d'épaisseur, obtenue à partir de cette poudre à mouler agglomérée, pour une tension de 5 000 V, est au plus de 15 pores/m².

10. Poudre à mouler agglomérée selon la revendication 9, caractérisée en ce que

a) elle contient 0,01 à 0,5 % en poids de motifs copolymérisés d'un oxyde de vinyle perfluoré de formule

$$CF_2 = CF—O—X,$$

dans laquelle X est un radical perfluoralkyle ayant de 1 à 4 atomes de carbone ou un radical de formule

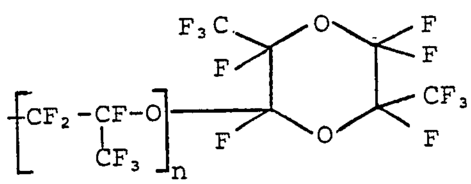

et n = 0 à 1, ainsi que les motifs copolymérisés du tétrafluoréthylène,

b) elle est constituée pour l'essentiel d'agglomérats ayant une granulométrie moyenne $d_{50}$ de 150 à 800 µm, qui sont constitués de particules primaires ayant une granulométrie moyenne $d_{50}$ de 20 à 80 µm et possèdent une forme sphéroïdale et une surface dense uniforme,

c) elle présente une masse volumique apparente d'au moins 800 g/l,

d) elle possède une fluence de 6,0 à 3,0 s/50 g pour un diamètre moyen d'agglomérat $d_{50}$ de 150 à 250 µm, et de 3,0 à 1,5 s/50 g pour un diamètre d'agglomérat $d_{50}$ de 250 à 1 000 µm,

e) elle a une stabilité de grain de 6,0 à 3,0 s/50 g pour un diamètre moyen d'agglomérat $d_{50}$ de 150 à 250 µm, et de 3,0 à 1,8 s/50 g pour un diamètre d'agglomérat $d_{50}$ de 250 à 1 000 µm,

f) elle présente une fraction supérieure à 60 % en poids d'agglomérats dont la granulométrie est comprise entre au moins 0,7 fois et au plus 1,3 fois la granulométrie moyenne $d_{50}$,

g) qu'un article moulé préparé à partir d'elle présente un coefficient de soudage d'au moins 0,80, et que

h) le nombre de pores, mesuré par les défauts électriques sur une feuille tranchée de 200 µm d'épaisseur, préparée à partir de cette poudre à mouler agglomérée, pour une tension de 5 000 V, est au plus de 6 pores/m².

11. Poudre à mouler agglomérée selon l'une ou plusieurs des revendications 9 ou 10, caractérisée en ce qu'il s'agit, pour les motifs copolymérisés de l'oxyde de vinyle perfluoré, de ceux de l'oxyde de n-propyle et de vinyle perfluoré.